# EUROPEAN PATENT SPECIFICATION

(11) **EP 2 716 523 B1**
(45) Date of publication and mention of the grant of the patent: **19.06.2019**
(21) Application number: 13184191.8
(22) Date of filing: 12.09.2013
(51) Int. Cl.: B62D 13/04

(54) **Regulating system, and a method in a regulating system**
Regelungssystem, und Verfahren in einem Regelungssystem
Système de régulation et procédé dans un système de régulation

(30) Priority: 03.10.2012 SE 1251114
(43) Date of publication of application: 09.04.2014
(73) Proprietor: Scania CV AB (publ), 151 87 Södertälje (SE)
(72) Inventor: Laanen, Frederik, SE-151 46 SÖDERTÄLJE (SE)
(74) Representative: Scania CV AB

(56) References cited:
- EP-A1- 0 484 668
- US-A- 5 244 226
- US-A1- 2012 245 796
- US-B2- 7 793 965

## Description

### Field of the invention

The present invention relates to a regulating system, and a method in a regulating system, according to the preambles of the independent claims.

The invention is applicable on articulated vehicles, e.g. buses and trucks, with steering on a tag axle situated to the rear of the articulation.

### Background to the invention

Legal requirements concerning operability are such that certain vehicle types (e.g. articulated buses) cannot be built in a conventional way but need the help of more steered axles than the front axle. This applies for example to buses which travel in corridor traffic, so-called BRT (bus rapid transit) traffic, and which are desired to be built extra-long, but this desire comes up against length limitations due to operability requirements. A steered tag axle increases manoeuvrability and reduces wear on tyres and articulations.

Some of the various ways in which the steering of a tag axle may be conducted are described in the patent specifications listed below.

DE-102006059082 refers to a system for making it easier to reverse an articulated vehicle which has a steered tag axle.

WO-2006/005124 describes an articulated vehicle with a steered rear axle, in which the regulation of the steer angle of the rear axle can be switched off, e.g. when reversing.

US-7793965 refers to a steering system for an articulated vehicle which has a steered tag axle and in which the tag axle's steer angle depends on the articulation angle.

US-2012/245796 describes a system for a trailer connected to a vehicle which include a controller in electrical communication with a first powertrain, second powertrain, and steering mechanism to assist in steering and power distribution, especially when reversing the vehicle system. US 2012/245796 discloses the preamble of device claim 1, method claim 5.

EP-0484668 refers to a steerable trailer and steering apparatus comprising: coupling angle sensor (117); trailer wheel steering angle sensor (127); actuators (123) for steering trailer wheels; and control means (131) for calculating and memorizing a travel direction of coupling point at voluntary points in response to signals transmittted from each of said sensors.

Articulated buses are at present often provided with a tractive axle which is rigid or a bogie with a rigid tag axle, but it is technically possible to provide an articulated bus with a steered tag axle situated to the rear of the tractive axle for greater operability. Steered tag axles may for example be operated by means of hydraulic systems. Such a hydraulic system is marketed under the designation ZF RAS (rear axle steering) by the manufacturer ZF. The design is such that a so-called master cylinder is fitted in the front vehicle and in one variant is operated physically by the droparm of the power steering gear. The master cylinder is also connected hydraulically to a slave cylinder fitted on the tag axle. To meet EU legal requirements (70/311/EEC or UN ECE R79) with regard to steering forces, the tag axle steering system has a flow monitor in the main circuit to warn of low hydraulic oil flow. When the flow monitor is activated, a so-called directional valve in the tag axle steering circuit is used to connect right and left control chambers in the slave cylinder together hydraulically in order to facilitate the steering force test and keep the tag axle in a centred state as well as possible with the nominal pressure value of 14 bar. The system is substantially identical with that used for unarticulated buses with steered tag axles.

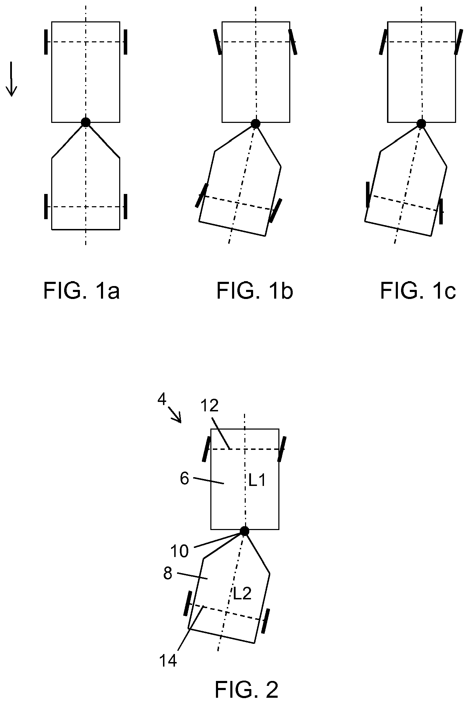

The system described above works in such a way that the driver turning the steering wheel, e.g. to make the vehicle turn left, will cause the steered tag axle to be subjected to steering to the right to make it easier for the vehicle to turn. This is depicted schematically in Figures 1a-1c illustrating an articulated vehicle during a reversing manoeuvre.

Providing an articulated bus with such a system involves problems when for example reversing or manoeuvring in confined spaces in that the tag axle may steer in the wrong direction depending on how the driver has turned the steering wheel and how great the articulation angle is.

This will be described with reference to an example where the driver is reversing and trying to swing the articulation to the left. This example starts from a situation in which the bus is at a zero articulation angle with its front and rear sections mutually in line - see Figure 1a. Initially the driver turns the steering wheel slightly to turn the road wheels to the right in order to swing the rear section to the left, whereupon the reversing and the swing commence. To "meet up" the rear section the driver will turn the steering wheel to the left and then steer the tag axle to the right owing to the slave cylinder location described above - see Figure 1b. So far, the effect of the steering will be as intended, but if the driver has for any reason (e.g. an obstacle or a narrow passage) to swing the rear section more (thus increasing the articulation angle) he/she will turn the steering wheel to the right, causing the tag axle to steer to the left - see Figure 1c. This will result in the rear section not trying to swing more but actually trying to decrease the articulation angle. The same occurs during driving forwards when the articulation angle and the steer angle are in different directions (e.g. the articulation turned to the left while the front wheels point to the right).

The above example shows the vehicle's manoeuvrability decreasing markedly and also increasing the load on the articulation. So-called slip angles of the tyres will also be abnormally great, leading to abnormal and undesirable tyre wear.

The object of the present invention is to eliminate the above disadvantages in the context of the manoeuvring of articulated vehicles, e.g. buses and trucks, with a steerable tag axle.

### Summary of the invention

The above objects are achieved with the invention defined by the independent claims.

Preferred embodiments are defined by the dependent claims.

In a preferred embodiment the regulating system is adapted to activating a directional valve of the hydraulic system for the tag axle steering and thereby to achieving a centred tag axle when the articulation angle and the angle of the steered road wheels (the steering wheel angle) are not in the same direction.

The regulating system and the method according to the present invention result in greater operability of the vehicle and reduced load upon the tag axle, with consequently less tyre wear.

### Brief description of drawings

Figures 1a-1c illustrate schematically a reversing manoeuvre with an articulated vehicle according to prior art.
Figure 2 illustrates schematically a similar reversing manoeuvre with an articulated vehicle according to the present invention.
Figure 3 illustrates schematically an articulated vehicle according to the present invention.
Figure 4 is a schematic block diagram intended to illustrate the regulating system according to the present invention in the context of an articulated vehicle.
Figure 5 is a flowchart illustrating the method according to the present invention.

### Detailed description of preferred embodiments of the invention

The present invention will now be described in detail with reference to the attached drawings, in which the same or similar parts are given the same reference notations.

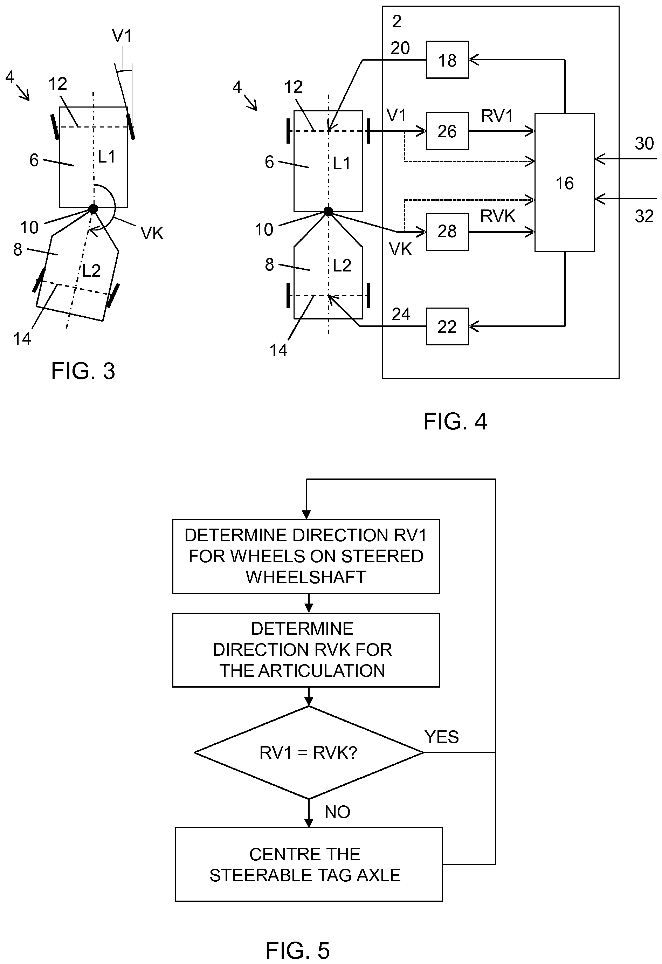

Referring mainly to Figure 4, the invention relates to a regulating system 2 for an articulated vehicle 4, e.g. a bus or a truck. The vehicle comprises a forward section 6 with a first longitudinal axis L1, and a rear section 8 with a second longitudinal axis L2. The two sections are connected to one another via an articulation 10 which enables them to pivot relative to one another, mainly in a horizontal plane. The vehicle further comprises a steered wheelshaft 12 in its forward section and a steerable tag axle 14 in its rear section. Further axles have been omitted from the drawings in order to illustrate the invention more clearly. Such axles may be situated in both the rear and/or the forward section of the vehicle. For example, the rear section may often have a tractive axle situated ahead of the steerable tag axle.

The regulating system comprises a processing unit 16, a forward steering unit 18 adapted to delivering a first control signal 20 to steer the wheels on the steered wheel shaft 12, and a rear steering unit 22 adapted to delivering a second control signal 24 to steer the wheels on the steerable tag axle 14.

According to the invention, the regulating system 2 further comprises a first measuring unit 26 adapted to determining the direction RV1 for an angle V1 of the wheels on the steered wheel shaft 12 relative to L1 in the vehicle's direction of forward movement. See Figure 3 showing the angle V1.

In one embodiment the direction RV1 is determined such that RV1 = VR when the vehicle turns right and RV1 = VL when the vehicle turns left. An alternative possibility is to define respective angle ranges for VR and VL, e.g. RVK = VR if V1 is between 0 and 45 degrees clockwise relative to L1, and RVK = VL when V1 is between 315 and 360 degrees clockwise relative to L1.

The regulating system also comprises a second measuring unit 28 adapted to determining the direction RVK for an angle VK of the articulation 10 between the first and second longitudinal axes (L1, L2). See Figure 3 showing the angle VK.

The direction RVK for the angle VK of the articulation between the first and second longitudinal axes (L1, L2) on the right side of the vehicle, in the vehicle's direction of forward movement, is preferably determined such that RVK = VR if VK is less than at most 180 degrees and RVK = VL if the angle is greater than at least 180 degrees. It is thus possible to indicate a range about 180 degrees, e.g. +/- 5 degrees, within which the articulation is allowed to vary before RVK is given the value VR or VL.

The second measuring unit 28 may for example take the form of respective rearward-directed cameras fitted on each side of the vehicle's forward section and comparing images with one another to arrive at a measurement of the angle VK. Another alternative is to provide an angle sensor at the pivot point of the articulation.

The first and second measuring units 26, 28 are adapted to conveying RV1 and RVK respectively to the processing unit 16 which is adapted to determining said second control signal 24 for the rear steering unit 22 on the basis of at least RV1 and RVK so that if RV1 does not coincide with RVK the second control signal is determined such that the steerable tag axle 14 is centred, i.e. the wheels on the tag axle are caused to run substantially parallel with L2, as illustrated in Figure 2.

In one embodiment the processing unit 16 is adapted to receiving a gear position signal 30 containing information about the vehicle's current gear and to taking same into account when determining the second control signal 24. If for example the gear position signal indicates that the vehicle is intending to reverse, this may represent a requirement for centring the steerable tag axle if the condition pertaining to RV1 and RVK is fulfilled.

In addition to the gear position signal, a speed signal 32 may also be conveyed to the processing unit 16. The speed signal represents the vehicle's running speed, its current value may be compared with a number of speed threshold values and the result of the comparison may serve as a basis for effecting the centring of the tag axle, thereby helping to enhance the vehicle's stability.

In a preferred embodiment said forward steering unit 18 and rear steering unit 22 take the form of hydraulic units preferably connected together. The rear steering unit is provided with a directional valve adapted to opening in response to the second control signal so that said tag axle is centred. This embodiment will be described in more detail below.

In a further embodiment the forward steering unit 18 and rear steering unit 22 are electronically operated, and preferable separate, hydraulic units.

A vehicle is often provided with a number of monitoring systems adapted to supervising various parameters of the vehicle, e.g. steering wheel angle, articulation angle and chosen gear. The above description refers to first and second measuring units for providing measured values of the angles needed for employing the invention. It is of course also possible, within the concept of the invention, that these measured values may come instead from one or more monitoring systems on board the vehicle which receive relevant measured values from various measuring units.

In the above preferred embodiment the invention is implemented by a hydraulically operated tag axle situated to the rear of the tractive axle. The hydraulic steering described here and above is for example used in steering of tag axles for buses and is for example described in European patent EP-1529717.

This known steering system comprises a master cylinder, a slave cylinder, a pressure accumulator, a pressure monitor, a flow monitor, a directional valve and a warning lamp. The hydraulic pump used for power steering has in this application a greater flow capacity than, for example, on buses which only have steering on the front axle.

The master cylinder is situated close to the power steering gear and is connected directly, or via an intermediate droparm, to the draglink arm in order to act upon the steered axle. The slave cylinder is situated close to the tag axle and acts upon this draglink arm.

The master cylinder comprises four chambers. Two of the chambers are in communication with the power steering gear and are pressurised when the power steering gear is acted upon by the steering wheel. The other two chambers are connected to two chambers in the slave cylinder and convey the steering force hydraulically to the wheels on the tag axle. To maintain good directional stability, the steering deflection of the tag axle is not affected by about the first five degrees of deflection of the front wheels.

The slave cylinder has a steering element with two chambers and a centring element. When the hydraulic oil from the master cylinder pressurises one of the chambers of the steering element the piston rod will transmit the force to the draglink arm. When the steering changes direction, the second chamber is pressurised and the piston rod is pushed in the other direction. When the steering deflection of the front wheels is less than about five degrees, the two steering chambers will be connected together via a function in the master cylinder. In this situation the centring element of the slave cylinder will become active and the oil in the centring element will be at a higher pressure than that prevailing in one of the steering chambers, causing the piston rod to stand still at mid-position, thus centring the tag axle.

In more detail, this is achieved by the centring element comprising two pistons, one of them fastened to the piston rod and the other being a loose piston. In the centring element there is also a fixed intermediate wall. The system pressure of for example 14 bar acts upon these pistons so that they will place themselves against the fixed intermediate wall and thus keep the road wheels in a straight-ahead position. The pressure accumulator absorbs pressure shocks in the system and maintains this pressure in the system, causing the wheels on the tag axle to tend towards a straight-ahead position upon steering wheel return.

When the hydraulic pressure in the system is too low, a pressure monitor will light up the warning lamp on the instrument panel.

In the steering system there is a flow monitor which controls the directional valve. If the flow in the steering system is below 5 litres/min, the flow monitor will act electrically upon the directional valve and at the same time light up the warning lamp on the instrument panel.

In the hydraulic system, i.e. the pipes, between the master cylinder and the centring cylinder there is a directional valve which is normally closed. This valve is acted upon by the flow monitor. When it is open the slave cylinder's two steering chambers are connected together and the tag axle is centred.

In this described and previously known hydraulically operated system, steering the steered axle in a given direction will steer the tag axle in the opposite direction, provided that the steering wheel deflection is more than five degrees. If it is less than five degrees, the tag axle will be centred.

In a preferred embodiment, centring of the tag axle is achieved by the directional valve being caused to open by the second control signal 24.

The invention relates also to a method in a regulating system for an articulated vehicle. The method will now be described with reference to the flowchart in Figure 5.

The method is implemented in the regulating system for the vehicle which comprises a forward section with a first longitudinal axis L1 and a rear section with a second longitudinal axis L2, said sections being connected to one another via an articulation which enables them to pivot relative to one another. The vehicle further comprises a steered wheel shaft in its forward section and a steerable tag axle in its rear section.

The method comprises the steps of
- determining the direction RV1 for an angle V1 of the wheels on the steered wheel shaft relative to L1 in the vehicle's direction of forward movement,
- determining the direction RVK for an angle VK at the articulation between the first and second longitudinal axes (L1, L2), said first and second measuring units being adapted to conveying RV1 and RVK respectively to said processing unit, the latter being adapted to
- determining a second control signal to steer the wheels on the steerable tag axle on the basis of at least RV1 and RVK so that if RV1 does not coincide with RVK the second control signal is determined such that the steerable tag axle is centred, i.e. the wheels on the tag axle are caused to run substantially parallel with L2.

One embodiment of the method takes a gear position signal containing information about the vehicle's current gear into account when determining said second control signal. This was discussed above in the context of describing the regulating system, which description is here cited. This applies also to the description of the method when implemented for hydraulic steering of the steered wheel shaft and the steerable tag axle.

It applies particularly to the control of a directional valve close to the hydraulically operated tag axle which is adapted to opening in response to said second control signal so that said tag axle is centred.

The method is also applicable to the forward and rear steering units in cases where they are electronically operated hydraulic units.

How the directions RV1 and RVK can be determined was previously described in the context of describing the regulating system, which description is here cited with regard to the application in conjunction with the method.

When the directions of V1 and VK again coincide and any other criteria, e.g. relating to gear choice and vehicle speed, are fulfilled, the function returns to normal, i.e. the steering of the tag axle takes place as usual.

The present invention is not restricted to the preferred embodiments described above. Various alternatives, modifications and equivalents may be used. The above embodiments are therefore not to be regarded as limiting the invention's protective scope which is defined by the attached claims.

## Claims

1. A regulating system (2) for an articulated vehicle (4), which vehicle comprises a forward section (6) with a first longitudinal axis L1 and a rear section (8) with a second longitudinal axis L2, said sections being connected to one another via an articulation (10) which enables them to pivot relative to one another, such that the vehicle further comprises a steered wheel shaft (12) in its forward section (6) and a steerable tag axle (14) in its rear section (8), and the regulating system comprises a processing unit (16), a forward steering unit (18) adapted to delivering a first control signal (20) to steer the wheels on the steered wheel shaft (12), a rear steering unit (22) adapted to delivering a second control signal (24) to steer the wheels on the steerable tag axle (14),
**characterised in that** the regulating system (2) further comprises a first measuring unit (26) adapted to determining the direction RV1 for an angle V1 of the wheels on the steered wheel shaft (12) relative to first longitudinal axis L1 in the vehicle's direction of forward movement, and a second measuring unit (28) adapted to determining the direction RVK for an angle VK at the articulation (10) between the first and second longitudinal axes (L1, L2), said first and second measuring units (26, 28) being adapted to conveying direction RV1 and direction RVK respectively to said processing unit (16), and that said processing unit (16) is adapted to determining said second control signal (24) for said rear steering unit (22) on the basis of at least direction RV1 and direction RVK so that if direction RV1 does not coincide with direction RVK the second control signal (24) is determined such that the steerable tag axle (14) is centred, said forward (18) and rear (22) steering units being hydraulic units, said rear steering unit (22) further comprising a directional valve adapted to opening in response to second control signal (24).

2. The regulating system according to claim 1, in which the processing unit (16) is adapted to receiving a gear position signal (30) containing information about the vehicle's current gear, and to taking same into account when determining said second control signal (24).

3. The regulating system according to claim 1 or 2, in which the processing unit (16) is adapted to receiving a speed signal (32) containing information about the vehicle's speed, to comparing its current speed with a number of speed threshold values and to taking the result of the comparison into account when determining said second control signal (24).

4. The regulating system according to any one of claims 1-3, in which said forward steering unit (18) and rear steering unit (22) are electronically operated hydraulic units.

5. A method in a regulating system for an articulated vehicle, which vehicle comprises a forward section with a first longitudinal axis L1 and a rear section with a second longitudinal section L2, said sections being connected to one another via an articulation which enables them to pivot relative to one another, which vehicle further comprises a steered wheel shaft in its forward section (6) and a steerable tag axle in its rear section,
**characterised in that** the method comprises the steps of
- determining the direction RV1 for an angle V1 of the wheels on the steered wheel shaft relative to L1 in the vehicle's direction of forward movement, and
- determining the direction RVK for an angle VK at the articulation between the first and second longitudinal axes (L1, L2), said first and second measuring units being adapted to conveying RV1 and RVK respectively to said processing unit, and that said processing unit is adapted to
- determining a second control signal for steering the wheels on the steerable tag axle on the basis of at least direction RV1 and direction RVK so that if direction RV1 does not coincide with direction RVK the second control signal is determined such that the steerable tag axle is centred.

6. The method according to claim 5, comprising taking a gear position signal which contains information about the vehicle's current gear into account when determining said second control signal.

7. The method according to claim 5 or 6, comprising taking a speed signal which contains information about the vehicle's current speed into account when determining said second control signal.

8. The method according to any one of claims 5-7, in which the steered wheelshaft and the steerable tag axle are operated hydraulically.

9. The method according to claim 8, in which a directional valve close to the hydraulically operated tag axle is adapted to opening in response to said second control signal so that said tag axle is centred.

10. The method according to any one of claims 5-7, in which said forward and rear steering units are electronically operated hydraulic units.

11. The method according to any one of claims 5-10, in which the direction RV1 is determined such that RV1 is assigned one of two values, VR when the vehicle turns right, VL when the vehicle turns left.

12. The method according to any one of claims 5-11, in which the direction RVK for the angle VK at the articulation between the first and second longitudinal axes (L1, L2) on the right side of the vehicle, in the vehicle's direction of forward movement, is determined such that RVK is assigned fixed value VR if VK is less than at most 180 degrees and RVK is assigned fixed value VL if the angle is greater than at least 180 degrees.

## Patentansprüche

1. Stausystem (2) für ein Gelenkfahrzeug (4), wobei das Fahrzeug einen vorderen Abschnitt (6) mit einer ersten Längsachse L1 und einen hinteren Abschnitt (8) mit einer zweiten Längsachse L2 umfasst, wobei die Abschnitte über ein Gelenk (10) miteinander verbunden sind, das es ihnen erlaubt, relativ zueinander zu schwenken, sodass das Fahrzeug ferner eine gelenkte Radachse (12) in seinem vorderen Abschnitt (6) und eine lenkbare Nachlaufachse (14) in seinem hinteren Abschnitt (8) umfasst, und wobei das Stausystem eine Verarbeitungseinheit (16), eine vordere Lenkeinheit (18), die dazu eingerichtet ist, ein erstes Steuersignal (20) zum Steuern der Räder an der gelenkten Radachse (12) zu liefern, und eine hintere Lenkeinheit (22) umfasst, die dazu eingerichtet ist, ein zweites Steuersignal (24) zum Steuern der Räder an der lenkbaren Nachlaufachse (14) zu liefern,
**dadurch gekennzeichnet, dass** das Stausystem (2) ferner eine erste Messeinheit (26), die dazu eingerichtet ist, die Richtung RV1 für einen Winkel V1 der Räder an der gelenkten Radachse (12) relativ zu der ersten Längsachse L1 in der Richtung einer Vorwärtsbewegung des Fahrzeugs zu bestimmen, und eine zweite Messeinheit (28) umfasst, die dazu eingerichtet ist, die Richtung RVK für einen Winkel VK an dem Gelenk (10) zwischen der ersten und der zweiten Längsachse (L1, L2) zu bestimmen, wobei die erste und die zweite Messeinheit (26, 28) dazu eingerichtet sind, die Richtung RV1 bzw. die Richtung RVK an die Verarbeitungseinheit (16) zu übermitteln, und dadurch, dass die Verarbeitungseinheit (16) dazu eingerichtet ist, das zweite Steuersignal (24) für die hintere Lenkeinheit (22) auf der Grundlage zumindest von Richtung RV1 und Richtung RVK zu bestimmen, sodass dann, wenn die Richtung RV1 nicht mit der Richtung RVK zusammenfällt, das zweite Steuersignal (24) derart bestimmt wird, dass die lenkbare Nachlaufachse (14) zentriert wird, wobei die vordere Lenkeinheit (18) und die hintere Lenkeinheit (22) hydraulische Einheiten sind, wobei die hintere Lenkeinheit (22) ferner ein Wegeventil umfasst, das dazu eingerichtet ist, in Reaktion auf das zweite Steuersignal (24) zu öffnen.

2. Steuersystem gemäß Anspruch 1, bei dem die Verarbeitungseinheit (16) dazu eingerichtet ist, ein Gangpositionssignal (30) zu empfangen, das Information über den gegenwärtigen Gang des Fahrzeugs enthält, und selbiges zu berücksichtigen, wenn sie das zweite Steuersignal (24) bestimmt.

3. Steuersystem gemäß Anspruch 1 oder 2, bei dem die Verarbeitungseinheit (16) dazu eingerichtet ist, ein Geschwindigkeitssignal (32) zu empfangen, das Information über die Geschwindigkeit des Fahrzeugs enthält, dessen gegenwärtige Geschwindigkeit mit einer Anzahl von Geschwindigkeitsgrenzwerten zu vergleichen, und das Ergebnis des Vergleichs zu berücksichtigen, wenn sie das zweite Steuersignal (24) bestimmt.

4. Steuersystem gemäß einem der Ansprüche 1 bis 3, bei dem die vordere Lenkeinheit (18) und die hintere Lenkeinheit (22) elektronisch betriebene hydraulische Einheiten sind.

5. Verfahren in einem Stausystem für ein Gelenkfahrzeug, wobei das Fahrzeug einen vorderen Abschnitt mit einer ersten Längsachse L1 und einen hinteren Abschnitt mit einer zweiten Längsachse L2 umfasst, wobei die Abschnitte über ein Gelenk miteinander verbunden sind, das es ihnen erlaubt, relativ zueinander zu schwenken, wobei das Fahrzeug ferner eine gelenkte Radachse in seinem vorderen Abschnitt (6) und eine lenkbare Nachlaufachse in seinem hinteren Abschnitt umfasst, **dadurch gekennzeichnet, dass** das Verfahren die Schritte umfasst:
- Bestimmen der Richtung RV1 für einen Winkel V1 der Räder an der gelenkten Radachse relativ zu L1 in der Richtung einer Vorwärtsbewegung des Fahrzeugs
- Bestimmen der Richtung RVK für einen Winkel VK an dem Gelenk zwischen der ersten und der zweiten Längsachse (L1, L2), wobei die erste und die zweite Messeinheit dazu eingerichtet sind, die Richtung RV1 bzw. die Richtung RVK an die Verarbeitungseinheit zu übermitteln, und dadurch, dass die Verarbeitungseinheit dazu eingerichtet ist
- ein zweites Steuersignal für ein Lenken der Räder an der lenkbaren Nachlaufachse auf der Grundlage zumindest von Richtung RV1 und Richtung RVK zu bestimmen, sodass dann, wenn die Richtung RV1 nicht mit der Richtung RVK zusammenfällt, das zweite Steuersignal derart bestimmt wird, dass die lenkbare Nachlaufachse zentriert wird.

6. Verfahren gemäß Anspruch 5, umfassend ein Berücksichtigen eines Gangpositionssignals, das Information über den gegenwärtigen Gang des Fahrzeugs enthält, wenn das zweite Steuersignal bestimmt wird.

7. Verfahren gemäß Anspruch 5 oder 6, umfassend ein Berücksichtigen eines Geschwindigkeitssignals, das Information über die gegenwärtige Geschwindigkeit des Fahrzeugs enthält, wenn das zweite Steuersignal bestimmt wird.

8. Verfahren gemäß einem der Ansprüche 5 bis 7, bei dem die gelenkte Radachse und die lenkbare Nachlaufachse hydraulisch betrieben werden.

9. Verfahren gemäß Anspruch 8, bei dem ein Wegeventil in der Nähe der hydraulisch betriebenen Nachlaufachse dazu eingerichtet ist, in Reaktion auf das zweite Steuersignal derart zu öffnen, dass die Nachlaufachse zentriert wird.

10. Verfahren gemäß einem der Ansprüche 5 bis 7, bei dem die vordere und die hintere Lenkeinheit elektronisch betriebene hydraulische Einheiten sind.

11. Verfahren gemäß einem der Ansprüche 5 bis 10, bei dem die Richtung RV1 derart bestimmt wird, dass RV1 einer von zwei Werten zugewiesen wird, VR wenn das Fahrzeug nach rechts fährt, VL wenn das Fahrzeug nach links fährt.

12. Verfahren gemäß einem der Ansprüche 5 bis 11, bei dem die Richtung RVK für den Winkel VK an dem Gelenk zwischen der ersten und der zweiten Längsachse (L1, L2) an der rechten Seite des Fahrzeugs, in der Richtung einer Vorwärtsbewegung des Fahrzeugs, derart bestimmt wird, dass RVK der feste Wert VR zugewiesen wird, falls VK kleiner ist als höchstens 180°, und RVK der feste Wert VL zugewiesen wird, falls der Winkel größer ist als wenigstens 180°.

## Revendications

1. Système de régulation (2) pour un véhicule articulé (4), lequel véhicule comprend une section avant (6) avec un premier axe longitudinal L1 et une section arrière (8) avec un second axe longitudinal L2, lesdites sections étant reliées les unes aux autres via une articulation (10) qui leur permet de pivoter l'une par rapport à l'autre, de telle sorte que le véhicule comporte en outre un arbre de roue directrice (12) dans sa partie avant (6) et un essieu traîné directionnel (14) dans sa partie arrière (8), et le système de régulation comprend une unité de traitement (16), une unité directrice avant (18) adaptée pour la délivrance d'un premier signal de commande (20) pour diriger les roues sur l'arbre de roue directrice (12), une unité directrice arrière (22) adaptée pour délivrer un second signal de commande (24) pour diriger les roues sur l'essieu traîné directionnel (14),
**caractérisé en ce que** le système de régulation (2) comprend en outre une première unité de mesure (26) adaptée pour la détermination de la direction RV1 pour un angle V1 des roues sur l'arbre de roue directrice (12) par rapport au premier axe longitudinal L1 dans le sens de la marche avant du véhicule, et une seconde unité de mesure (28) adaptée pour la détermination de la direction RVK d'un angle VK au niveau de l'articulation (10) entre les premier et second axes longitudinaux (L1, L2), lesdites première et seconde unités de mesure (26, 28) étant adaptées à la transmission de la direction RV1 et de la direction RVK respectivement vers ladite unité de traitement (16), et que ladite unité de traitement (16) est adaptée pour la détermination dudit second signal de commande (24) pour ladite unité de direction arrière (22) sur la base d'au moins la direction RV1 et la direction RVK, de sorte que si la direction RV1 ne coïncide pas avec la direction RVK, le second signal de commande (24) est déterminé, de telle sorte que l'essieu directeur orientable (14) soit centré, lesdites unités de direction avant (18) et arrière (22) étant des unités hydrauliques, ladite unité de direction arrière (22) comprenant en outre
une vanne directionnelle adaptée pour s'ouvrir en réponse à un second signal de commande (24).

2. Système de régulation selon la revendication 1, dans lequel l'unité de traitement (16) est adaptée pour recevoir un signal de position de vitesse (30) contenant des informations sur la vitesse actuelle du véhicule et pour en tenir compte lors de la détermination dudit second signal de commande (24).

3. Système de régulation selon la revendication 1 ou 2, dans lequel l'unité de traitement (16) est adaptée pour la réception d'un signal de vitesse (32) contenant des informations sur la vitesse du véhicule, pour la comparaison de sa vitesse actuelle avec un nombre de valeurs de seuil de vitesse et pour la prise en compte du résultat de la comparaison lors de la détermination dudit second signal de commande (24).

4. Système de régulation selon l'une quelconque des revendications 1 à 3, dans lequel ladite unité de direction avant (18) et ladite unité de direction arrière (22) sont des unités hydrauliques à commande électronique.

5. Procédé dans un système de régulation pour un véhicule articulé, lequel véhicule comprend une section avant avec un premier axe longitudinal L1 et une section arrière avec une seconde section longitudinale L2, lesdites sections étant reliées les unes aux autres par une articulation permettant leur pivotement l'une par rapport à l'autre, ce véhicule comprend en outre un arbre de roue directrice dans sa partie avant (6) et un essieu traîné directionnel dans sa partie arrière,
**caractérisé en ce que** le procédé comprend les étapes consistant en
- la détermination de la direction RV1 pour un angle V1 des roues sur l'arbre de roue directrice par rapport à L1 dans le sens de marche avant du véhicule, et
- la détermination de la direction RVK pour un angle VK au niveau de l'articulation entre les premier et second axes longitudinaux (L1, L2), lesdites première et seconde unités de mesure étant adaptées pour transmettre respectivement RV1 et RVK vers ladite unité de traitement, et **en ce que** ladite unité de traitement est adaptée à
- la détermination d'un second signal de commande pour diriger les roues sur l'essieu traîné directionnel sur la base d'au moins la direction RV1 et la direction RVK de sorte que si la direction RV1 ne coïncide pas avec la direction RVK, le second signal de commande est déterminé de sorte que l'essieu traîné directionnel soit centré.

6. Procédé selon la revendication 5, comprenant la prise en compte d'un signal de position de vitesse qui contient des informations sur la vitesse actuelle du véhicule lors de la détermination dudit second signal de commande.

7. Procédé selon la revendication 5 ou 6, comprenant la prise en compte d'un signal de vitesse contenant des informations sur la vitesse actuelle du véhicule lors de la détermination dudit second signal de commande.

8. Procédé selon l'une quelconque des revendications 5 à 7, dans lequel l'arbre de roue directrice et l'essieu traîné directionnel sont actionnés de manière hydraulique.

9. Procédé selon la revendication 8, dans lequel une vanne directionnelle proche de l'essieu traîné actionné hydrauliquement est adaptée pour s'ouvrir en réponse audit second signal de commande de sorte que ledit essieu traîné soit centré.

10. Procédé selon l'une quelconque des revendications 5 à 7, dans lequel lesdites unités de direction avant et arrière sont des unités hydrauliques à commande électronique.

11. Procédé selon l'une quelconque des revendications 5 à 10, dans lequel la direction RV1 est déterminée de telle sorte qu'une des deux valeurs est assignée à RV1, VR lorsque le véhicule tourne à droite, VL lorsque le véhicule tourne la gauche.

12. Procédé selon l'une quelconque des revendications 5 à 11, dans lequel la direction RVK pour l'angle VK au niveau de l'articulation entre les premier et second axes longitudinaux (L1, L2) du côté droit du véhicule, dans la direction d'avancement du véhicule, est déterminé de telle sorte que RVK se voit attribuer une valeur fixe VR si VK est inférieure à 180 degrés et que RVK se voit attribuer une valeur fixe VL si l'angle est supérieur à moins 180 degrés.
